# EUROPÄISCHE PATENTSCHRIFT

(11) **EP 2 743 023 B1**
(45) Veröffentlichungstag und Bekanntmachung des Hinweises auf die Patenterteilung: **17.06.2015**
(21) Anmeldenummer: 13005738.3
(22) Anmeldetag: 10.12.2013
(51) Int. Cl.: B23D 59/00, B27B 1/00

(54) **Messeinrichtung zur Krümmungsmessung**
Measuring device for measuring curvature
Dispositif de mesure d'une courbure

(30) Priorität: 12.12.2012 DE 102012112131
(43) Veröffentlichungstag der Anmeldung: 18.06.2014
(73) Patentinhaber: Gebrüder Linck GmbH & Co. KG "Gatterlinck" Maschinenfabrik, 77704 Oberkirch (DE)
(72) Erfinder:
(74) Vertreter: Lemcke, Brommer & Partner Patentanwälte Partnerschaft mbB

(56) Entgegenhaltungen:
- DE-A1- 2 837 742
- DE-C2- 4 191 940
- US-A- 4 139 035
- US-A- 4 774 988
- US-A1- 2004 177 896
- US-A1- 2006 027 061
- US-A1- 2009 255 607
- US-B1- 7 108 030

## Beschreibung

Die vorliegende Erfindung betrifft eine Anordnung gemäß dem Oberbegriff des Anspruchs 1, eine solche Anordnung ist in US 7108030 offenbart, und ein entsprechendes Verfahren in Anspruch 10.

Für die Erzeugung von Schnittholz aus Rundholz stehen eine Reihe von Verfahren, in erster Linie spanende Verfahren, zur Verfügung. Dabei ist aus der natürlichen Form der Rundhölzer das größtmögliche Schnittholzvolumen zu gewinnen.

Die Berücksichtigung des Merkmals "Krümmung" der natürlichen Form der Rundhölzer, führte zur Entwicklung einer bogenfolgenden Einschnitttechnologie.

Die Krümmung oder Krummschaftigkeit eines Rundholzstammes ist die Abweichung seiner Längsachse von der Geraden. Dabei sind übliche Begriffe "zweischnürig" für einen geraden Stamm, "einschnürig" für einen in einer Ebene krummen Stamm und "unschnürig" für einen in unterschiedlichen Ebenen krummen Stamm. Rundholzsortiervorschriften berücksichtigen bei der Einteilung in Qualitätsklassen die Krummschaftigkeit.

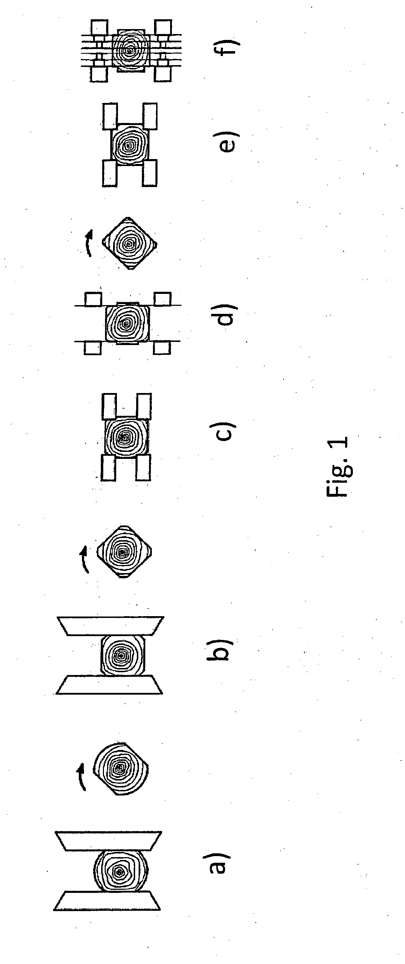

Moderne Profiliertechnik mit ihren Hauptverfahren Spanen, Fräsen, Sägen in den Arbeitsschritten
Spanen / Drehen / Spanen / Drehen / Fräsen / Sägen / Drehen / Fräsen / Sägen (siehe Figur 1)
kann bekannterweise einen bogenfolgenden Einschnitt realisieren.

Nach der Erzeugung eines vierseitig angespanten Kantlings mit in der Regel zwei ersten parallelen, geraden Flächen und zwei zweiten meist parallelen, gekrümmten Flächen, wird üblicherweise vor dem nächsten Bearbeitungsschritt der Kantling dreidimensional vermessen.

Die Kenntnis des Waldkantenverlaufs am Kantling ermöglicht eine Seitenbrettoptimierung nach Lage, Dicke, Breite und Länge. Die Kenntnis der Krümmung des Kantlings dient bei passivem bogenfolgenden Einschnitt zur Ausrichtung des Kantlings vor der folgenden Bearbeitungseinheit und bei aktivem bogenfolgenden Einschnitt zur Ausrichtung des Kantlings und zur Positionierung der Bearbeitungswerkzeuge während des Durchlaufs des Kantlings durch die folgenden Bearbeitungseinheiten.

Für die dreidimensionale Vermessung des Kantlings mit Krümmungserkennung sind Messeinrichtungen bekannt, bei denen der Kantling geradlinig durch eine Messvorrichtung transportiert wird. Um die Geradlinigkeit nahezu zu erreichen, wird der Kantling mindestens eine Holzlänge vor und nach der Messvorrichtung keiner äußeren Krafteinwirkung ausgesetzt, die die Lage des Kantlings auf dem Fördermittel verändern könnte.

Der Nachteil dieser Vorrichtung und Verfahrensweise besteht hauptsächlich in seiner Baulänge.

Andere bekannte Verfahren, bei denen eine Messvorrichtung ohne den Abstand von mindestens einer Holzlänge nach der Bearbeitungseinheit angeordnet ist, können zwar den Waldkantenverlauf ermitteln, ihr Nachteil besteht aber darin, keine zuverlässige Aussage über die Krümmung des Kantlings zu liefern.

Aus der Offenlegungsschrift DE2837742 sind ein Verfahren und eine Vorrichtung zum Besäumen von zwei unbearbeitete Längsränder aufweisenden Brettern bekannt. Das zu besäumende Brett durchläuft drei hintereinander angeordnete Messportale. Wesentlich dabei ist, dass das Brett von der Messvorrichtung in die Besäumvorrichtung und durch diese hindurchgeleitet wird, ohne dass es seine Stellung gegenüber der Zuführeinrichtung ändert.

Auch in den Schriften US 7,108,030 und US 2004/0177896 sind jeweils Messeinrichtungen beschrieben, bei denen durch Verwendung mehrerer Messebenen, welche jeweils nur für einen Teilabschnitt des Halbzeugs zuständig sind, die erforderliche Messstrecke verkürzt werden kann, um das Halbzeug vor Eintritt in eine nachfolgende Bearbeitungseinheit vollständig zu vermessen.

Aus der Schrift DE 41 91 940 ist eine Anlage zum Positionieren von Holzstämmen beim Schneiden von Blöcken gezeigt, bei welcher der einzelne Stamm von einer Drehvorrichtung zunächst in einem Drehwinkel gedreht wird, der erforderlich ist, um eine vollständige Ablesung der Stammform durch ein optisches Lesegerät zu ermöglichen, und anschließend in eine Drehposition gedreht wird, die beim Sägen einen optimalen Ertrag an Holz ergibt.

Die Aufgabe der Erfindung besteht darin, eine Anordnung der eingangs genannten Art anzugeben, welcher mit kürzerer Baulänge auskommt und eine zuverlässigere Aussage über die Krümmung des Kantlings ermöglicht. Außerdem soll ein entsprechendes Verfahren zur Ermittlung der Krümmung eines aus Rundholz produzierten, vierseitig angespanten Halbzeuges angegeben werden.

Die Aufgabe wird hinsichtlich der Anordnung gelöst durch die Merkmale des Anspruchs 1 und hinsichtlich des Verfahrens durch die Merkmale des Anspruchs 10. Vorteilhafte Ausgestaltungen sind den abhängigen Ansprüchen zu entnehmen, auf deren Inhalt zur Vermeidung von Wiederholungen hiermit vollinhaltlich Bezug genommen wird.

Erfindungsgemäß wird bei einer Anordnung der eingangs genannten Art eine Messeinrichtung vorgesehen, die mindestens drei Messebenen aufweist und in Transportrichtung entweder so nahe hinter der Bearbeitungseinheit angeordnet ist, dass beim Transport des Halbzeugs durch die Messeinrichtung am in Transportrichtung vorderen Ende des Halbzeuges bereits gemessen wird, während am hinteren Ende des Halbzeuges noch die Bearbeitung durch die Bearbeitungseinheit stattfindet, oder so nahe vor der Bearbeitungseinheit angeordnet ist, dass beim Transport des Halbzeugs durch die Messeinrichtung am in Transportrichtung hinteren Ende des Halbzeuges noch gemessen wird, während am vorderen Ende des Halbzeuges bereits die Bearbeitung durch die Bearbeitungseinheit stattfindet.

Durch die Auswertung von Messdaten der mindestens drei hintereinander angeordneten Messebenen, wobei die Messdaten in geeigneter Weise, vornehmlich gleichzeitig in allen drei Messebenen, erfasst und kombiniert werden, kann die Krümmung des Halbzeugs bestimmt werden, auch wenn dieses während der Messung Relativbewegungen zur Transportrichtung ausführt.

Die Messebenen können somit direkt nach der Bearbeitungseinheit zur Erzeugung eines vierseitig angespanten Kantlings angeordnet sein. Der Abstand der Messebenen zueinander ist vorzugsweise so zu wählen, dass über die Länge des Kantlings die Anzahl der gleichzeitig aufgenommenen Kantlingsprofile der mindestens drei Messebenen unter Berücksichtigung der Messgenauigkeit maximiert wird.

Die Erfindung betrifft außerdem auch eine Messeinrichtung zur Ermittlung der Krümmung in einer Krümmungsebene eines aus Rundholz produzierten, vierseitig angespanten Halbzeugs bei dessen Transport durch die Messeinrichtung entlang einer Transportrichtung, wobei die Messeinrichtung Messgeber für mindestens drei aufeinanderfolgende Messebenen aufweist, die derart zusammenwirkend ausgebildet sind, dass eine gleichzeitige Erfassung von Messdaten in allen drei Messebenen erfolgt. Die Messeinrichtung umfasst weiterhin eine Auswerteeinheit, welche angepasst ist, aus Messdaten von einer Serie zeitlich aufeinanderfolgender Einzelmessungen und der vom Halbzeug zwischen zwei Einzelmessungen jeweils entlang der Transportrichtung zurückgelegten Wegstrecken einen Krümmungsverlauf des Halbzeugs zu ermitteln.

Hierbei wird vorzugsweise durch jede Einzelmessung ein Teilbereich des Kantlings vermessen, wobei die Einzelmessungen zeitlich so aufeinander folgen, dass in aufeinanderfolgenden Einzelmessungen überlappende Teilbereiche des Kantlings vermessen werden.

Weitere Merkmale und Vorteile der vorliegenden Erfindung ergeben sich aus der Darstellung eines Ausführungsbeispiels anhand der beigefügten Zeichnung. Es zeigt:
- Fig. 1: eine schematische Darstellung der Arbeitsabläufe beim Profilieren von Baumstämmen anhand von Querschnitten durch einen Baumstamm nach den einzelnen Bearbeitungsgängen,
- Fig. 2: eine perspektivische Darstellung der Vermessung eines Kantlings,
- Fig. 3: eine schematische Darstellung einer Bearbeitungseinrichtung mit integrierter Messeinrichtung,
- Fig. 4: die Ermittlung einer Krümmungslinie aus den Messdaten der erfindungsgemäßen Messeinrichtung, und
- Fig. 5: die Ermittlung einer dreidimensionalen Deckfläche gemäß einer Weiterbildung des erfindungsgemäßen Messverfahrens.

Bei vorliegenden Ausführungsbeispiel geht es darum, die Krümmung eines Kantlings, also eines vierseitig angespanten Baumstammes, während des Herstellungsprozesses von Schnittholz aus Rundholz in einer Krümmungsebene zu vermessen, um diese Krümmung bei der Schnittführung bei einem anschließenden Sägevorgang zu berücksichtigen.

Die Arbeitsabläufe bei der Herstellung von Schnittholz aus Rundholz sind dabei schematisch in Figur 1 dargestellt, wobei ein Querschnitt des bearbeiteten Werkstücks nach jedem Bearbeitungsgang gezeigt wird.

In Figur 1a ist zunächst der Querschnitt eines Rundholzes B.0 gezeigt, das in Richtung senkrecht zur Zeichnungsebene durch ein erstes, als Spanner SP1 bezeichnetes Bearbeitungswerkzeug geführt wird. Der Spaner SP1 entfernt dabei an zwei gegenüberliegenden Seiten die Waldkante und erzeugt so ein Werkstück B.1 mit zwei planparallelen Flächen. Dieses wird nun um 90° gedreht und in den in Figur 1b gezeigten zweiten Spaner SP2 geführt, welcher die beiden verbliebenen Seiten bespant, um die Waldkanten zu entfernen.

Bereits bei der Bearbeitung durch die Spaner SP1, SP2 wird eine am Rundholz B.0 zuvor zunächst grob bestimmte Krümmung berücksichtigt, und zwar derart, dass bei einem einschnürigen Rundholz zunächst zwei erste planparallele, also nicht gekrümmte Flächen erzeugt werden, indem die Bearbeitung durch den Spaner S.1 parallel zu der Krümmungsebene erfolgt, und der Werkstück B.1 anschließend in einer der vorbestimmten Krümmungslinie bogenfolgenden Kurve durch den Spaner S.2 geführt wird, so dass zwei zweite parallele aber gekrümmte Flächen entstehen.

Das Ergebnis ist ein gekrümmter Kantling mit einem Querschnitt B.2. Der Kantling B.2 hat vier angespante Flächen, weist jedoch kantseitig noch Waldkanten auf, die nun in den weiteren Bearbeitungsschritten vor dem abschließenden Sägen entfernt werden.

Dazu wird der Kantling B.2 nun erneut gedreht und an den Kanten mittels eines in Figur 1c gezeigten Fräsers F1 gefräst. Anschließend läuft er durch eine in Figur 1d gezeigte Säge S1. Die Säge S1 erzeugt zwei seitliche Einschnitte, die genau in der Tiefe der in Figur 1c erzeugten Einfräsungen liegen, so dass zwei erste, waldkantenfreie Seitenbretter abfallen. Da die Bearbeitung in den Figuren 1c und 1d wieder wie in Figur 1 a in Ebenen parallel zur Krümmungsebene erfolgt, kann die Schnittführung hierbei ohne Berücksichtigung einer Krümmung erfolgen.

Der verbliebende Kantling B.3 ist nun im Profil etwas schmaler geworden, weist aber immer noch Reste von Waldkanten auf. Um diese zu entfernen wird der Kantling B.3 nun erneut gedreht und durch den in Figur 1e gezeigten Fräser F2 geführt. Dieser erzeugt Einfräsungen entlang der Kanten des Kantlings B.3 und entfernt so die verbliebenen Waldkanten. Anschließend wird er durch eine Säge S2 geführt, welche aus dem gespanten und gefrästen Kantling B.3 einzelne Schnitthölzer erzeugt. Im Bereich der zuvor erzeugten Fräsungen entstehen dabei wie aus Figur 1e ersichtlich wieder zwei etwas schmalere Seitenbretter. Bei der Säge S2 (wie im übrigen auch bei der Säge S1) kann es sich beispielsweise um eine Doppelwellenkreissäge handeln.

Wesentlich ist hierbei, dass die Krümmung des Kantlings B.3 bei der Schnittführung berücksichtigt wird, indem er bogenfolgenden entlang seiner Krümmungslinie durch die Säge S2 geführt wird, bzw. beim aktivem bogenfolgenden Einschnitt die Sägeblätter der Säge S2 beim Durchlauf entsprechend positioniert und der Bogenform folgend geführt werden. Die genaue Kenntnis der Krümmungslinie des Kantlings B.3 ist daher von besonderer Bedeutung.

Im Allgemeinen reicht um die gewünschten Herstellungstoleranzen zu erhalten, die anfängliche, am Rundholz durchgeführte Bestimmung der Krümmung nicht aus, so dass nach der spanenden Bearbeitung und vor dem abschließenden Sägen eine erneute Vermessung zur genauen Bestimmung der Krümmungskurve, wie sie sich nach dem Spanen ergibt, durchgeführt wird.

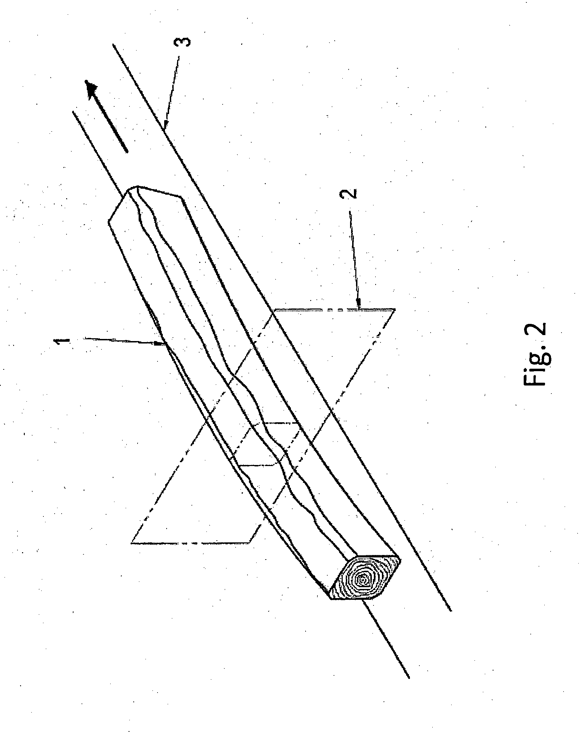

Eine solche Messung ist schematisch in Figur 2 gezeigt. Diese zeigt einen Abschnitt eines aus Rundholz produzierten Halbzeuges 1 (Kantling), das von einer Messeinrichtung 2 beaufschlagt wird, während es auf einer Transportbahn 3 in Pfeilrichtung A befördert wird.

Bei bekannten Verfahren der eingangs erläuterten Art erfolgte die Bestimmung der Krümmung durch Vermessung des Kantlings 1 als Ganzes, indem dieser eine Messebene 2 durchläuft. Dies erfordert, dass der Kantling 1 während der Messung keinerlei Relativbewegung zur Transport- bzw. Messrichtung A erfährt, da zwischen einer Abstandsänderung aufgrund der Krümmung und einer Abstandsänderung aufgrund einer Relativbewegung nicht unterschieden werden kann. Hierfür ist eine Baulänge der Messeinrichtung erforderlich, die der doppelten Länge des Kantlings, welche in der Regel 6m beträgt, entspricht. Durch Verwendung mehrerer Messebenen, die jede einen Teilabschnitt des Kantlings vermisst, kann die erforderliche Messlänge zwar reduziert werden, allerdings ergibt sich auch hier die Forderung, dass der Kantling während der Messung sich nicht relativ zur Transportrichtung bewegen darf. Dies schließt jegliche Bearbeitungsschritte während der Messung aus.

Die Erfindung schlängt nun vor, die Messeinrichtung mit einer (Teil-)Bearbeitungseinheit zur Erzeugung oder Bearbeitung eines vierseitig angespanten Kantlings derart zu kombinieren und in Transportrichtung A so nahe hinter der Bearbeitungseinheit anzuordnen, dass am in Transportrichtung A vorderen Ende des Halbzeuges 1 bereits gemessen wird, während am hinteren Ende des Halbzeuges 1 noch die Bearbeitung durch die Bearbeitungseinheit stattfindet.

Da insbesondere wegen der bogenförmigen Führung des Kantlings 1 durch die Bearbeitungseinheit, spätestens aber wenn er die zugehörigen Förderwalzen der vorgelagerten Bearbeitungseinheit verlässt, der Kantling 1 eine Relativbewegung zur Transportrichtung A erfährt, muss das Messverfahren entsprechend angepasst sein und gegen derartige, insbesondere auch ruckartige Relativbewegungen während der Messung robust sein.

Erreicht wird dies, indem entsprechende Messgeber (Sensoren) für mindestens drei hintereinander angeordnete Messebenen vorgesehen sind, mittels derer eine gleichzeitige Erfassung von Messdaten in allen drei Messebenen erfolgt. Aus einer Serie so erzeugter Messdaten kann unter Kenntnis der vom Kantling 1 zwischen den Einzelmessungen jeweils zurückgelegten Wegstrecken durch Auswertung und Kombination der Messdaten der zeitlich aufeinanderfolgenden Einzelmessungen der genaue Krümmungsverlauf ermittelt werden.

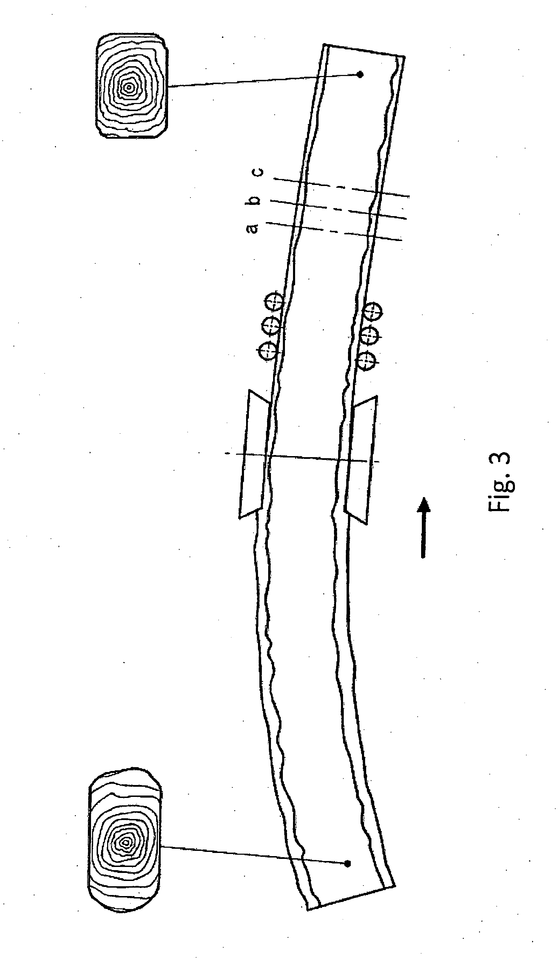

Eine Anordnung aus Bearbeitungseinheit und Messeinrichtung ist in Figur 3 schematisch gezeigt. Dargestellt ist hierin ein Längsschnitt durch das Halbzeug 1 aus Figur 2, das von einer Transporteinheit 5 in Transportrichtung A durch eine Bearbeitungseinheit 4 gefördert wird, deren Arbeitsergebnis anhand eines Vergleichs des Querschnitts B.1 des Baumstamms 1 vor der Bearbeitungseinheit 4 mit dem Querschnitt B.2 des Baumstamms 1 nach der Bearbeitungseinheit 4 ersichtlich ist, und anschließend die Messeinheit 6 wie in Figur 2 durchläuft, welche erfindungsgemäß mindestens drei hintereinander angeordnete Messebenen a, b und c umfasst.

Bei der Berabeitungseinheit 4 handelt es sich um eine dem Spaner SP2 aus Figur 1 entsprechende Bearbeitungseinheit, welche aus einem Rundholzstamm mit zwei angespanten Seiten, wie im Querschnitt B.1 gezeigt, einen Kantling mit vier angespanten Seiten, wie im Querschnitt B.2 dargestellt, erzeugt.

Der Kantling 1 wird mittels der Förderwalzen 5 durch die Bearbeitungseinheit 4 und dann an der Messeinrichtung 6 in Transportrichtung A vorbei bewegt. Allerdings erfolgt das Durchführen des Kantlings 1 durch die Bearbeitungseinheit 4 bogenfolgend entlang der zuvor grob bestimmten Krümmungslinie des ursprünglichen Baumstamms, so dass der Kantling 1 beim Durchlaufen der Messeinrichtung (2) keine rein translatorische Bewegung in Transportrichtung A, sondern zusätzlich eine Relativbewegung hierzu ausführt. Sobald der Kantling 1 sich mit seinem vorderen Teil im Bereich der Messeinheit 6 befindet, wird er in der Ebene der Krümmung nicht mehr geführt.

Die Krümmung des Kantlings 1 liegt wie aus Figur 3 ersichtlich, in der Zeichnungsebene, in welcher auch die Messung erfolgt. Die Messung selbst erfolgt mittels einfacher Abstandsmessgeber 6, welche beispielsweise als Laser-Abstandsmesser zur optischen Abstandsmessung nach dem Interferenzverfahren ausgebildet sein können. Selbstverständlich können hier aber auch andere Messverfahren, wie Lasertriangulation, Laufzeitmessverfahren mittels Abstandsradar o.ä. zum Einsatz kommen, wobei die Auswahl des geeigneten Messverfahrens von der angestrebten Messgenauigkeit abhängt.

Die Messung macht sich zu Nutze, dass die Vermessung an einer bearbeiteten Oberfläche, nämlich der senkrecht zur Krümmungsebene gespanten Seite des Kantlings 1 erfolgt. Somit liegt eine gekrümmte, aber ansonsten plane Fläche zur Vermessung vor, so dass keine unregelmäßigen Oberflächenverläufe zu berücksichtigen sind.

Während nun der Kantling 1 an der Messeinrichtung 6 vorbeibewegt wird, wird in zeitlicher Abfolge eine Serie von Einzelmessungen durchgeführt, wobei jede Einzelmessung drei Abstandwerte in den Messebenen a, b, und c erzeugt. Der zeitliche Abstand zwischen den Einzelmessungen ist so gewählt, dass jeweils ein Überlappungsbereich bezogen auf den in der vorangehenden Einzelmessung vermessenen Abschnitts des Kantlings 1 vermessen wird. Aus den drei Abstandswerten jeder Einzelmessung kann ein Bogenstück oder Polygon gebildet werden. Bei bekanntem Vorschub des Kantlings 1 können diese Bogenstücke oder Polygone bei der Datenauswertung dann rechnerisch so verschoben und aneinandergesetzt ("aneinandergeheftet") werden, dass eine Gesamt-Krümmungslinie des Kantlings 1 erhalten wird. Eventuelle Relativbewegungen der Bogenstücke zwischen den Einzelmessungen werden so kompensiert.

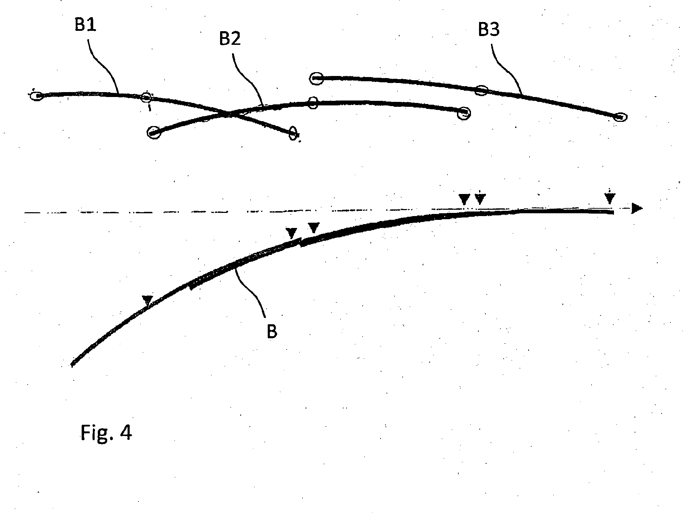

Dies ist schematisch für drei Einzelmessungen in Figur 4 gezeigt. Jede der drei Einzelmessungen ergibt drei Messpunkte, welche den kürzesten Abstand des zu vermessenden Teilabschnitts der Seitenfläche des Kantlings 1 zu dem jeweiligen Messsensor in der betreffenden Messebene a, b, c angibt. Durch die drei Messpunkte jeder Messung kann ein Bogenstück B1, B2, B3 gelegt werden. Ein solches Bogenstück kann mathematisch beispielsweise, ohne dass die Erfindung hierauf beschränkt wäre, durch ein Polynom 2. Ordnung (d.h. eine Parabel) angenähert werden.

Die so erhaltenen einzelnen Bogenstücke B1, B2, B3 werden nun mit dem bekannten Vorschub des Kantlings in Transportrichtung A verschoben. Die so verschobenen Bogenstücke B1, B2, B3 haben jeweils einen Überlappungsbereich, in welchem die Bogenstücke B1, B2, B3 durch Drehung und Verschiebung senkrecht zur Transportrichtung A aneinander angepasst werden können. Entsprechende mathematische Einpassverfahren zur Kurvenanpassung, wie etwa das Gaußsche Verfahren der kleinsten Fehlerquadrate, das Verfahren nach Tschebyscheff oder vergleichbare Verfahren, sowie deren Implementierung in eine programmierbare Datenverarbeitungsanlage sind dem Fachmann an sich bekannt. Das Ergebnis der aneinandergesetzten Einzel-Bogenstücke B1, B2, B3 ist eine Krümmungslinie B, die den Krümmungsverlauf des Kantlings in der Krümmungsebene wiedergibt. Im Rahmen der vorliegenden Erfindung ist daher auch eine entsprechende Auswerteeinheit mit umfasst, vorzugsweise in Form einer entsprechend programmierten Datenverarbeitungsanlage, welche die Auswertung der Messdaten nach der beschriebenen Methode durchführt.

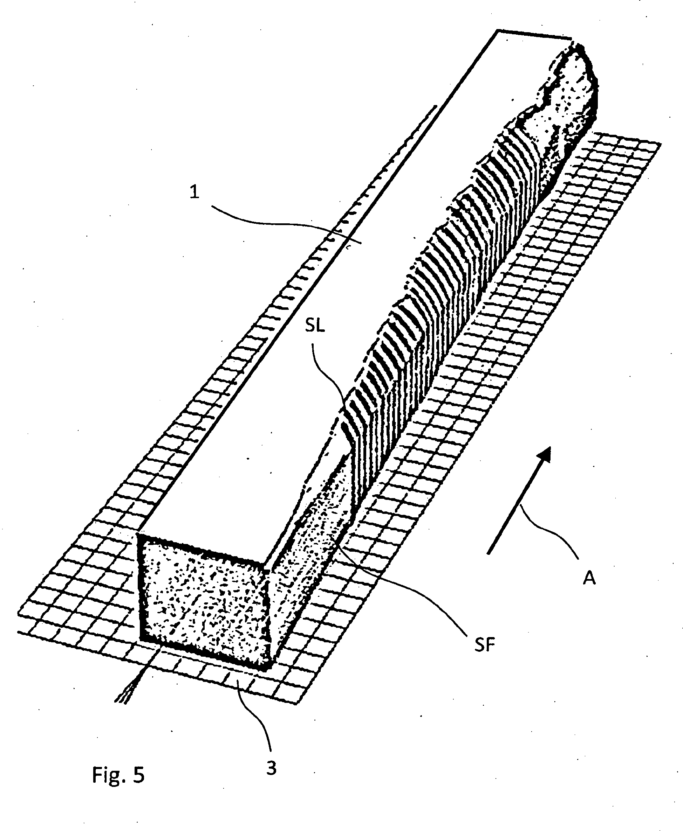

Eine Weiterbildung ergibt sich, indem nicht nur der kürzeste Abstand bestimmt wird, sondern eine optische Abtastung in vertikaler Richtung entlang der jeweiligen Messebenen a, b, c durchgeführt wird. Hierdurch wird das in Figur 5 gezeigte Deckflächenprofil in Form einzelner Scan-Linien SL erhalten. Über den Bereich der bearbeiteten, planen Seitenfläche SF kann gemittelt werden, um den Abstandswert für die Berechnung der Krümmungslinie zu ermitteln, während im Bereich der Kanten, der sich als stärkere Abweichungen von der erwarteten, gekrümmten aber ansonsten planen Seitenfläche SF ermitteln lässt, der Verlauf der noch am Kantling 1 verbliebenen Waldkante sichtbar wird.

Wird auf beiden Seiten der Transportbahn 3 eine entsprechende Messeinrichtung vorgesehen, um den beidseitigen Waldkantenverlauf zu ermitteln, so können die Messergebnisse bei den nachfolgenden Arbeitsschritten des Fräsens und Sägens vorteilhaft berücksichtigt werden.

Im Vergleich zum bisherigen Messprinzip kann durch die erfindungsgemäße Anordnung eine wesentliche Verkürzung der erforderlichen Länge der Anlage erzielt werden. Der Abstand zwischen den einzelnen Messebenen a, b, c kann jeweils in einem Bereich von 400 bis 1000 mm liegen, so dass die gesamte Messeinrichtung lediglich eine Länge von 800 bis 2000 mm benötigt. Messungen können beispielsweise alle 10 cm Wegstrecke durchgeführt werden, so das ein ausreichend dichtes Netz von Messpunkten - etwa 50 bis 60 Einzelmessungen für einen einzigen Kantling - und somit eine hohe Genauigkeit bei der Bestimmung der Krümmungslinie erhalten wird.

Die Wegstrecke, welche für die Auswertung der Messdaten benötigt wird, kann entweder durch einen in die Messeinrichtung oder auch in die vorangehende Bearbeitungseinheit integrierten Weggeber, beispielsweise einen Drehgeber an einer Förderwalze, direkt ermittelt werden, oder aus einer bekannten (oder ermittelten) Fördergeschwindigkeit und der Zeitdifferenz zwischen zwei Einzelmessungen ermittelt werden.

Die Verwendung der drei Messebenen und nachfolgender Datenauswertung ermöglicht somit eine Kompensation von horizontalen Bewegungen während des Messvorgangs, so dass eine Erfassung einer genauen Krümmungskontur noch während der Bearbeitung des Kantlings möglich wird.

Darüber hinaus wird eine höhere Messgenauigkeit bei der Ermittlung der Krümmungslinie erzielt, da unbeabsichtigte vertikale Bewegungen durch z.B. Transportübergänge, welche die Krümmungslinie bei bisherigen Verfahren verfälschen konnten, hier keinen Einfluss mehr auf die Messergebnisse haben.

Die erfindungsgemäße Messeinrichtung, welche im Ausführungsbeispiel in vorteilhafter Weise mit einer Bearbeitungseinheit für einen Kantling kombiniert beschrieben wurde, kann natürlich auch für sich genommen zur Vermessung der Krümmung eines aus Rundholz hergestellten Halbzeugs mit mindestens einer bespanten Seite verwendet werden. Die Messeinrichtung kann auch mit anderen Bearbeitungseinheiten zum vor allem spanenden Bearbeiten von Holz kombiniert werden, beispielsweise Fräsen, Sägen, Hobeln oder dergleichen.

Der nach dem erfindungsgemäßen Verfahren bestimmte Krümmungsverlauf des vorderen, bereits vermessene Endes des Kantlings kann bereits für die Bearbeitung in einer nachfolgenden Bearbeitungsmaschine verwendet werden, während das hintere Ende des Stammes erst noch fertig vermessen wird. Es ist daher auch möglich, die erfindungsgemäße Messeinrichtung vor eine nachfolgende Bearbeitungsmaschine - wie etwa die Fräse F1 in Figur 1c - zu integrieren, und zwar derart, dass beim Transport des Kantlings durch die Messeinrichtung am in Transportrichtung hinteren Ende des Kantlings noch gemessen wird, während am vorderen Ende des Kantlings bereits die Bearbeitung durch die nachfolgende Bearbeitungseinheit stattfindet.

## Patentansprüche

1. Anordnung umfassend eine Bearbeitungseinheit (4) zur Herstellung oder Bearbeitung eines aus Rundholz produzierten, vierseitig angespanten Halbzeuges (1), eine Messeinrichtung zur Ermittlung einer Krümmung des Halbzeuges (1) in einer Krümmungsebene sowie eine Transporteinheit (5) zum Transport des Halbzeugs (1) durch die Messeinrichtung (6) längs einer Transportrichtung (A),
wobei
die Messeinrichtung (6) mindestens drei hintereinander angeordnete Messebenen (a, b, c) aufweist und
- die Messeinrichtung (6) in Transportrichtung (A) so nahe hinter der Bearbeitungseinheit (4) angeordnet ist, dass beim Transport des Halbzeugs (1) durch die Messeinrichtung (6) am in Transportrichtung (A) vorderen Ende des Halbzeuges (1) bereits gemessen wird, während am hinteren Ende des Halbzeuges noch die Bearbeitung durch die Bearbeitungseinheit (4) stattfindet oder
- die Messeinrichtung (6) in Transportrichtung (A) so nahe vor der Bearbeitungseinheit (4) angeordnet ist, dass beim Transport des Halbzeugs (1) durch die Messeinrichtung (6) am in Transportrichtung (A) hinteren Ende des Halbzeuges (1) noch gemessen wird, während am vorderen Ende des Halbzeuges bereits die Bearbeitung durch die Bearbeitungseinheit (4) stattfindet, **dadurch gekennzeichnet, dass**
die Anordnung weiterhin eine Säge (S2) umfasst und derart ausgebildet ist, die mittels der Messeinrichtung (6) ermittelte Krümmung bei einer Schnittführung zu berücksichtigen, indem das Halbzeug bogenfolgend entlang der gemessenen Krümmungslinie durch die Säge (S2) geführt wird oder Sägeblätter der Säge (S2) beim Durchlauf des Halbzeugs entsprechend positioniert und der Bogenform folgend geführt werden.

2. Anordnung nach Anspruch 1, welche mindestens einen Weggeber aufweist, der angepasst ist, vom Halbzeug (1) bei seinem Transport zurückgelegte Wegstrecken zu messen.

3. Anordnung nach Anspruch 1 oder 2, bei dem die Messeinrichtung (2) mit der Transporteinheit (5) derart zusammenwirkend ausgebildet ist, dass das Halbzeug (1) beim Durchlaufen der Messeinrichtung (2) keine rein translatorische Bewegung in Transportrichtung (A) ausführt.

4. Anordnung nach einem der Ansprüche 1 bis 3, bei dem die Messeinrichtung (6) Messgeber für jede der drei Messebenen (a, b, c) aufweist, die derart zusammenwirkend ausgebildet sind, dass eine gleichzeitige Erfassung von Messdaten in allen drei Messebenen erfolgt.

5. Anordnung nach Anspruch 4, bei der eine mit der Messeinrichtung (6) verbundene Auswerteeinheit vorgesehen ist, welche angepasst ist, aus Messdaten von einer Serie zeitlich aufeinanderfolgender Einzelmessungen und der vom Halbzeug (1) zwischen zwei Einzelmessungen jeweils zurückgelegten Wegstrecken einen Krümmungsverlauf des Halbzeugs (1) zu ermitteln.

6. Anordnung nach einem der vorangehenden Ansprüche, bei der die Messeinrichtung (6) mit der Transporteinheit (5) und der Bearbeitungseinheit (4) derart zusammenwirkt, dass das Halbzeug (1), sobald es sich mit seinem vorderen Teil im Bereich der Messeinheit (6) befindet, in der Ebene der Krümmung nicht mehr geführt wird.

7. Anordnung nach einem der vorangehenden Ansprüche, bei der der Abstand der Messebenen (a, b, c) zueinander zwischen 400 mm und 1000 mm beträgt.

8. Anordnung nach einem der vorangehenden Ansprüche, bei der die Messeinrichtung (6) derart angeordnet ist, dass eine zur Krümmungsebene senkrechte, angespante Seitenfläche des Halbzeugs (1) vermessen wird.

9. Anordnung nach einem der vorangehenden Ansprüche, bei der die Messeinrichtung (6) ausgebildet ist, eine optische Abtastung in vertikaler Richtung entlang der jeweiligen Messebenen (a, b, c) durchzuführen um zusätzlich zur Krümmung einen Waldkantenverlauf zu ermitteln.

10. Verfahren zur Ermittlung der Krümmung eines aus Rundholz erzeugten, vierseitig angespanten Halbzeuges (1), bei dem das Halbzeug (1) längs einer Transportrichtung (A) durch eine Bearbeitungseinheit (4) zur Erzeugung des Halbzeuges (1) und anschließend durch eine Messeinrichtung (6) zur Ermittlung der Krümmung des Halbzeuges (1) in einer Krümmungsebene transportiert wird, wobei
die Messeinrichtung (6) mindestens drei hintereinander angeordnete Messebenen (a, b, c) aufweist und
- in Transportrichtung (A) so nahe hinter der Bearbeitungseinheit (4) angeordnet ist, dass beim Transport des Halbzeugs (1) durch die Messeinrichtung (6) am in Transportrichtung (A) vorderen Ende des Halbzeuges (1) bereits gemessen wird, während am hinteren Ende des Halbzeuges noch die Bearbeitung durch die Bearbeitungseinheit (4) stattfindet, oder
- die Messeinrichtung (6) in Transportrichtung (A) so nahe vor der Bearbeitungseinheit (4) angeordnet ist, dass beim Transport des Halbzeugs (1) durch die Messeinrichtung (6) am in Transportrichtung (A) hinteren Ende des Halbzeuges (1) noch gemessen wird, während am vorderen Ende des Halbzeuges bereits die Bearbeitung durch die Bearbeitungseinheit (4) stattfindet, **dadurch gekennzeichnet, dass**
die mittels der Messeinrichtung (6) ermittelte Krümmung bei einer abschließenden Schnittführung in einer Säge berücksichtigt wird, indem das Halbzeug bogenfolgend entlang der gemessenen Krümmungslinie durch die Säge (S2) geführt wird oder Sägeblätter der Säge (S2) beim Durchlauf des Halbzeugs entsprechend positioniert und der Bogenform folgend geführt werden.

11. Verfahren nach Anspruch 10, bei dem vom Halbzeug (1) bei seinem Transport zurückgelegte Wegstrecken gemessen werden.

12. Verfahren nach Anspruch 10 oder 11, bei dem eine gleichzeitige Erfassung von Messdaten in allen drei Messebenen (a, b, c) mittels Messgebern für jede der drei Messebenen (a, b, c) erfolgt.

13. Verfahren nach Anspruch 12, bei dem aus Messdaten von einer Serie zeitlich aufeinanderfolgender Einzelmessungen und der vom Halbzeug (1) zwischen zwei Einzelmessungen jeweils zurückgelegten Wegstrecken ein Krümmungsverlauf des Halbzeugs (1) ermittelt wird.

14. Verfahren nach einem der Ansprüche 10 bis 13, bei dem dass das Halbzeug (1) beim Durchlaufen der Messeinrichtung (6) so geführt wird, dass es keine rein translatorische Bewegung durchführt.

15. Verfahren nach einem der Ansprüche 10 bis 14, bei dem das Halbzeug (1), sobald es sich mit seinem vorderen Teil im Bereich der Messeinheit (6) befindet, in der Ebene der Krümmung nicht mehr geführt wird.

## Claims

1. Arrangement comprising a processing unit (4) for manufacturing or processing a semi-finished product (1) produced from round timber and machined on four sides, a measuring device for determining a curvature of the semi-finished product (1) in a plane of curvature, and a transport unit (5) for transporting the semi-finished product (1) through the measuring device (6) along a transport direction (A),
wherein
the measuring device (6) has at least three measurement planes (a, b, c) arranged one after the other and
- the measuring device (6) is arranged so closely after the processing unit (4) in the transport direction (A) that during transport of the semi-finished product (1) through the measuring device (6) measurement is already being made at the forward end of the semi-finished product (1) in the transport direction (A) while processing by means of the processing unit (4) is still taking place at the rear end of the semi-finished product or
- the measuring device (6) is arranged so closely before the processing unit (4) in the transport direction (A) that during transport of the semi-finished product (1) through the measuring device (6) measurement is still being made at the rear end of the semi-finished product (1) in the transport direction (A) while processing by means of the processing unit (4) is already taking place at the forward end of the semi-finished product,
**characterised in that**
the arrangement further comprises a saw (S2) and is constructed in such a way that the curvature determined by means of the measuring device (6) is taken into account in guidance of a cutting operation **in that** the semi-finished product is guided through the saw (S2) so as to follow a curve along the measured line of curvature or, during passage of the semi-finished product, saw blades of the saw (S2) are appropriately positioned and guided so as to follow the curved shape.

2. Arrangement according to claim 1, which has at least one displacement sensor which is adapted to measure distances covered by the semi-finished product (1) during the transport thereof.

3. Arrangement according to claim 1 or 2, wherein the measuring device (2) is arranged to co-operate with the transport unit (5) in such a way that the semi-finished product (1) does not perform any purely translational movement in the transport direction (A) during its passage through the measuring device (2).

4. Arrangement according to any one of claims 1 to 3, wherein the measuring device (6) has measuring sensors for each of the three measurement planes (a, b, c), which measuring sensors are arranged to co-operate in such a way that measurement data are acquired simultaneously in all three measurement planes.

5. Arrangement according to claim 4, wherein an evaluating unit connected to the measuring device (6) is provided, which evaluating unit is adapted to determine a curvature characteristic of the semi-finished product (1) from measurement data of a series of chronologically consecutive individual measurements and the distances covered by the semi-finished product (1) in each case between two individual measurements.

6. Arrangement according to any one of the preceding claims, wherein the measuring device (6) co-operates with the transport unit (5) and the processing unit (4) in such a way that the semi-finished product (1), as soon as its forward portion is located in the region of the measuring unit (6), is no longer guided in the plane of the curvature.

7. Arrangement according to any one of the preceding claims, wherein the spacing between the measurement planes (a, b, c) is between 400 mm and 1000 mm.

8. Arrangement according to any one of the preceding claims, wherein the measuring device (6) is arranged in such a way that a machined side face of the semi-finished product (1) perpendicular to the plane of curvature is measured.

9. Arrangement according to any one of the preceding claims, wherein the measuring device (6) is arranged to perform optical scanning in the vertical direction along the respective measurement planes (a, b, c) in order to determine a wane characteristic in addition to the curvature.

10. Method of determining the curvature of a semi-finished product (1) produced from round timber and machined on four sides, wherein the semi-finished product (1) is transported along a transport direction (A) through a processing unit (4) to produce the semi-finished product (1) and then through a measuring device (6) to determine the curvature of the semi-finished product (1) in a plane of curvature,
wherein
the measuring device (6) has at least three measurement planes (a, b, c) arranged one after the other and
- is arranged so closely after the processing unit (4) in the transport direction (A) that during transport of the semi-finished product (1) through the measuring device (6) measurement is already being made at the forward end of the semi-finished product (1) in the transport direction (A) while processing by means of the processing unit (4) is still taking place at the rear end of the semi-finished product or
- the measuring device (6) is arranged so closely before the processing unit (4) in the transport direction (A) that during transport of the semi-finished product (1) through the measuring device (6) measurement is still being made at the rear end of the semi-finished product (1) in the transport direction (A) while processing by means of the processing unit (4) is already taking place at the forward end of the semi-finished product,
**characterised in that**
the curvature determined by means of the measuring device (6) is taken into account in final guidance of a cutting operation in a saw **in that** the semi-finished product is guided through the saw (S2) so as to follow a curve along the measured line of curvature or, during passage of the semi-finished product, saw blades of the saw (S2) are appropriately positioned and guided so as to follow the curved shape.

11. Method according to claim 10, wherein distances covered by the semi-finished product (1) during the transport thereof are measured.

12. Method according to claim 10 or 11, wherein measurement data are acquired simultaneously in all three measurement planes (a, b, c) by means of measuring sensors for each of the three measurement planes (a, b, c).

13. Method according to claim 12, wherein a curvature characteristic of the semi-finished product (1) is determined from measurement data of a series of chronologically consecutive individual measurements and the distances covered by the semi-finished product (1) in each case between two individual measurements.

14. Method according to any one of claims 10 to 13, wherein the semi-finished product (1) is guided in such a way during its passage through the measuring device (6) that it does not perform any purely translational movement.

15. Method according to any one of claims 10 to 14, wherein the semi-finished product (1), as soon as its forward portion is located in the region of the measuring unit (6), is no longer guided in the plane of the curvature.

## Revendications

1. Ensemble comprenant une unité d'usinage (4) pour fabriquer ou usiner un demi-produit (1) produit par enlèvement de copeaux sur quatre côtés à partir de bois rond, un dispositif de mesure pour déterminer une courbure du demi-produit (1) dans un plan de courbure ainsi qu'une unité de transport (5) pour transporter le demi-produit (1) à travers le dispositif de mesure (6) suivant une direction de transport (A),
le dispositif de mesure (6) présentant au moins trois plans de mesure (a, b, c) disposés l'un derrière l'autre et
- le dispositif de mesure (6) étant disposé assez près après l'unité d'usinage (4) dans la direction de transport (A) pour que, lors du transport du demi-produit (1) à travers le dispositif de mesure (6), une mesure soit déjà effectuée à l'extrémité avant du demi-produit (1) dans la direction de transport (A) pendant que l'usinage par l'unité d'usinage (4) a encore lieu à l'extrémité arrière du demi-produit ou
- le dispositif de mesure (6) étant disposé assez près avant l'unité d'usinage (4) dans la direction de transport (A) pour que, lors du transport du demi-produit (1) à travers le dispositif de mesure (6), une mesure soit encore effectuée à l'extrémité arrière du demi-produit (1) dans la direction de transport (A) pendant que l'usinage par l'unité d'usinage (4) a déjà lieu à l'extrémité avant du demi-produit,
**caractérisé en ce que**
l'ensemble comprend en outre une scie (S2) et est conçu de façon à tenir compte de la courbure déterminée au moyen du dispositif de mesure (6) lors d'une coupe par le fait que le demi-produit est guidé à travers la scie (S2) suivant la courbure le long de la ligne de courbure mesurée ou que les lames de scie de la scie (S2) sont positionnées de façon correspondante lors du passage du demi-produit et guidées suivant la forme de la courbure.

2. Ensemble selon la revendication 1, lequel présente au moins un capteur de déplacement qui est adapté pour mesurer les distances parcourues par le demi-produit (1) lors de son transport.

3. Ensemble selon la revendication 1 ou 2, dans lequel le dispositif de mesure (2) est conçu pour coopérer avec l'unité de transport (5) de façon que le demi-produit (1) n'exécute pas un mouvement de translation pure dans la direction de transport (A) lors du passage par le dispositif de mesure (2).

4. Ensemble selon l'une des revendications 1 à 3, dans lequel le dispositif de mesure (6) présente des capteurs de mesure pour chacun des trois plans de mesure (a, b, c), qui sont conçus pour coopérer de façon à effectuer une détection simultanée de données de mesure dans les trois plans de mesure.

5. Ensemble selon la revendication 4, dans lequel une unité d'évaluation est reliée au dispositif de mesure (6), laquelle est adaptée pour déterminer une courbure du demi-produit (1) à partir des données de mesure d'une série de mesures individuelles se succédant dans le temps et des distances parcourues par le demi-produit (1) entre deux mesures individuelles.

6. Ensemble selon l'une des revendications précédentes, dans lequel le dispositif de mesure (6) coopère avec l'unité de transport (5) et l'unité d'usinage (4) de façon que le demi-produit (1) ne soit plus guidé dans le plan de la courbure dès que sa partie avant se trouve dans la zone de l'unité de mesure (6).

7. Ensemble selon l'une des revendications précédentes, dans lequel la distance des plans de mesure (a, b, c) entre eux est comprise entre 400 mm et 1000 mm.

8. Ensemble selon l'une des revendications précédentes, dans lequel le dispositif de mesure (6) est disposé de façon à mesurer une surface latérale usinée du demi-produit (1) perpendiculaire au plan de courbure.

9. Ensemble selon l'une des revendications précédentes, dans lequel le dispositif de mesure (6) est conçu pour effectuer un balayage optique en direction verticale le long des plans de mesure (a, b, c) respectifs afin de déterminer, en plus de la courbure, un profil de flache.

10. Procédé pour déterminer la courbure d'un demi-produit (1) produit par enlèvement de copeaux sur quatre côtés à partir de bois rond, selon lequel le demi-produit (1) est transporté suivant une direction de transport (A) à travers une unité d'usinage (4) pour produire le demi-produit (1) et ensuite à travers un dispositif de mesure (6) pour déterminer la courbure du demi-produit (1) dans un plan de courbure, le dispositif de mesure (6) présentant au moins trois plans de mesure (a, b, c) disposés l'un derrière l'autre et
- étant disposé assez près après l'unité d'usinage (4) dans la direction de transport (A) pour que, lors du transport du demi-produit (1) à travers le dispositif de mesure (6), une mesure soit déjà effectuée à l'extrémité avant du demi-produit (1) dans la direction de transport (A) pendant que l'usinage par l'unité d'usinage (4) a encore lieu à l'extrémité arrière du demi-produit ou
- le dispositif de mesure (6) étant disposé assez près avant l'unité d'usinage (4) dans la direction de transport (A) pour que, lors du transport du demi-produit (1) à travers le dispositif de mesure (6), une mesure soit encore effectuée à l'extrémité arrière du demi-produit (1) dans la direction de transport (A) pendant que l'usinage par l'unité d'usinage (4) a déjà lieu à l'extrémité avant du demi-produit,
**caractérisé en ce que**
la courbure déterminée au moyen du dispositif de mesure (6) est prise en compte lors d'une coupe finale dans une scie par le fait que le demi-produit est guidé à travers la scie (S2) suivant la courbure le long de la ligne de courbure mesurée ou que les lames de scie de la scie (S2) sont positionnées de façon correspondante lors du passage du demi-produit et guidées suivant la forme de la courbure.

11. Procédé selon la revendication 10, selon lequel les distances parcourues par le demi-produit (1) lors de son transport sont mesurées.

12. Procédé selon la revendication 10 ou 11, selon lequel une détection simultanée de données de mesure dans les trois plans de mesure (a, b, c) est effectuée au moyen de capteurs de mesure pour chacun des trois plans de mesure (a, b, c).

13. Procédé selon la revendication 12, selon lequel une courbure du demi-produit (1) est déterminée à partir des données de mesure d'une série de mesures individuelles se succédant dans le temps et des distances parcourues par le demi-produit (1) entre deux mesures individuelles.

14. Procédé selon l'une des revendications 10 à 13, selon lequel le demi-produit (1) est guidé de façon à ne pas exécuter un mouvement de translation pure lors du passage par le dispositif de mesure (6).

15. Procédé selon l'une des revendications 10 à 14, selon lequel le demi-produit (1) n'est plus guidé dans le plan de la courbure dès que sa partie avant se trouve dans la zone de l'unité de mesure (6).
